# EUROPÄISCHE PATENTANMELDUNG

(11) **EP 1 260 401 A2**
(43) Veröffentlichungstag der Anmeldung: **27.11.2002**
(21) Anmeldenummer: 02007009.0
(22) Anmeldetag: 27.03.2002
(51) Int. Cl.: B60K 17/10

(54) **Hydraulische Antriebseinheit für ein Raupenfahrzeug**

(30) Priorität: 21.05.2001 DE 10125714
(71) Anmelder: Kässbohrer Geländefahrzeug AG, 88471 Laupheim (DE)
(72) Erfinder: Zambelli, Hans-Dieter, 5302 Henndorf a. Wallersee (AT)
(74) Vertreter: Patentanwälte Ruff, Wilhelm, Beier, Dauster & Partner

(57) **Zusammenfassung**

2.1. Eine hydraulische Antriebseinheit für ein Raupenfahrzeug mit wenigstens einem hydraulischen Konstantmotor für ein Antriebsrad, mit wenigstens einer vorgeschalteten, verstellbaren Fördereinrichtung für das Hydraulikmedium, sowie mit einer Steuereinheit zum Ansteuern der Fördereinrichtung und des wenigstens einen Konstantmotors ist bekannt.
2.2. Erfindungsgemäß ist wenigstens ein zusätzliches Fördermittel zur Erhöhung des Fördervolumens des Hydraulikmediums zu dem Konstantmotor hin vorgesehen.
2.3. Einsatz für Pistenfahrzeuge.

## Beschreibung

Die Erfindung betrifft eine hydraulische Antriebseinheit für ein Raupenfahrzeug, insbesondere zur Präparierung von Schneepisten, mit wenigstens einem hydraulischen Konstantmotor für ein Antriebsrad sowie wenigstens einer vorgeschalteten, verstellbaren Fördereinrichtung für das Hydraulikmedium, sowie mit einer Steuereinheit zum Ansteuern der Fördereinrichtung und des wenigstens einen Konstantmotors.

Eine solche hydraulische Antriebseinheit ist für Raupenfahrzeuge, die zur Präparierung von Schneepisten in Skigebieten eingesetzt werden, allgemein bekannt. Ein solches Raupenfahrzeug weist auf beiden Fahrzeugseiten jeweils ein Raupenband auf, das unabhängig hydraulisch angetrieben ist. Hierzu ist pro Antriebsseite ein hydraulischer Konstantmotor, auch als Hydromotor bezeichnet, vorhanden, der ein entsprechendes, das jeweilige Raupenband antreibendes Antriebsrad antreibt. Um eine Steuerung des hydraulischen Konstantmotors jeder Antriebsseite zu ermöglichen, ist auf jeder Antriebsseite jedem Konstantmotor eine verstellbare Fördereinrichtung für das Hydraulikmedium vorgesehen, die durch eine Steuereinheit ansteuerbar ist. Die Steuereinheit weist neben der Regelelektronik Servoverstellgeräte oder Proportionalsteuerungen auf. Jeder hydraulische Konstantmotor weist ein definiertes Schluckvolumen auf. Aus dem jeweils eingestellten Fördervolumen der Fördereinrichtung ergibt sich relativ zu dem zugeordneten hydraulischen Kostantmotor eine definierte Übersetzung. Dadurch sind auch die maximalen Drehzahlen und Drehmomente an jedem Antriebsrad definiert. Aufgrund einer solchen hydraulischen Antriebseinheit ergibt sich für ein entsprechendes Raupenfahrzeug eine stufenlose Geschwindigkeitsregelung. Die verstellbaren hydraulischen Fördereinrichtungen sind durch einen Verbrennungsmotor, insbesondere einen Dieselmotor, antreibbar. Die Höchstgeschwindigkeit des Raupenfahrzeuges ist bei maximaler Drehzahl des Verbrennungsmotors erreichbar. Hieraus resultiert ein hoher Kraftstoffverbrauch, ein hoher Lärmpegel sowie ein hoher Verschleiß am Verbrennungsmotor oder zugeordnetem Getriebe.

Aufgabe der Erfindung ist es, eine hydraulische Antriebseinheit der eingangs genannten Art zu schaffen, die zumindest in ebenem Gelände Fahrten des Raupenfahrzeuges mit reduziertem Kraftstoffverbrauch, reduziertem Lärmpegel und reduziertem Motorverschleiß ermöglicht.

Diese Aufgabe wird dadurch gelöst, dass wenigstens ein zusätzliches Fördermittel zur Erhöhung des Fördervolumens des Hydraulikmediums zu dem Kostantmotor hin vorgesehen ist. Die erfindungsgemäße Lösung geht von der Erkenntnis aus, dass die hydraulischen Konstantmotoren mit höheren Drehzahlen zu fahren sind. Da hierdurch ein höheres Schluckvolumen an jedem Konstantmotor entsteht, ist erfindungsgemäß vorgesehen, der verstellbaren Fördereinrichtung ein zusätzliches Födermittel zuzuordnen, das das Fördervolumen zu dem Konstantmotor hin erhöht. Der Einsatz wenigstens eines zusätzlichen Fördermittels ermöglicht den Einsatz der bewährten, bereits vorhandenen verstellbaren Fördereinrichtungen für die Konstantmotoren, die einen guten Wirkungsgrad aufweisen. Würden die bekannten verstellbaren Fördereinrichtungen und zusätzliche Fördermittel durch eine gemeinsame, größere Förderpumpe ersetzt, so wäre dies an eine Reduzierung der maximalen Drehzahl der Förderpumpe gebunden. Insbesondere bei mittleren und kleinen Geschwindigkeiten des Raupenfahrzeuges würden sich schlechte Wirkungsgrade aufgrund der Abhängigkeit der verstellbaren Fördereinrichtungen vom Schwenkwinkel der entsprechenden Fördereinrichtung ergeben. Der grundsätzliche Aufbau einer verstellbaren Fördereinrichtung, wie er bei Raupenfahrzeugen insbesondere für den Einsatz auf Schneepisten verwendet wird, ist bekannt, so dass an dieser Stelle hierauf nicht näher eingegangen werden muß. Durch die erfindungsgemäße Lösung, einer üblichen verstellbaren Fördereinrichtung ein zusätzliches Fördermittel zuzuordnen, ergibt sich auch in mittleren und kleineren Geschwindigkeitsbereichen ein guter Wirkungsgrad der Fördereinrichtungen. Die Baugrößen der Fördereinrichtungen bleiben gering. Die hydraulischen Konstantmotoren ergeben einen guten Wirkungsgrad. Die maximalen Geschwindigkeiten des Raupenfahrzeugs sind gegenüber bekannten Raupenfahrzeugen höher. Auch bei hohen Geschwindigkeiten sind noch gute Lenkeigenschaften des Raupenfahrzeugs erzielbar. Als zusätzliches Fördermittel kann entweder eine eigenständige, vorzugsweise mit einem geringeren Fördervolumen als die verstellbare Fördereinrichtung versehene, verstellbare Förderpumpe vorgesehen sein. Es ist auch möglich, für beide Antriebsseiten eine zentrale, verstellbare Förderpumpe vorzusehen, der ein Förderstromteiler nachgeschaltet ist. Der Förderstromteiler teilt die zusätzlich benötigten Förderströme pro Antriebsseite auf und leitet diese zu der bestehenden Einheit aus verstellbaren Fördereinrichtungen zum hydraulischen Konstantmotor. Der Stromteiler dient somit in Verbindung mit der zentralen Förderpumpe als zusätzliches Fördermittel im Sinne der Erfindung. Als zentrale Förderpumpe kann insbesondere eine bereits vorhandene Windenpumpe eingesetzt werden, die zum Antrieb einer grundsätzlich bekannten Winde auf dem Raupenfahrzeug dient.

In Ausgestaltung der Erfindung sind hydraulische Konstantmotoren mit einem Schluckvolumen von mehr als 120cm³/U vorgesehen. Durch den Einsatz von hydraulischen Kostantmotoren mit gegenüber bekannten Konstantmotoren erhöhtem Schluckvolumen wird ein höheres Drehmoment am Antriebsrad und eine um einen bestimmten Prozentsatz erhöhte Höchstgeschwindigkeit erzielt.

Weitere Vorteile und Merkmale der Erfindung ergeben sich aus den Ansprüchen sowie aus der nachfolgenden Beschreibung von bevorzugten Ausführungsbeispielen der Erfindung, die zum Teil anhand der Zeichnungen dargestellt sind.
- Fig. 1: zeigt ein Schaltbild einer ersten Ausführungsform einer hydraulischen Antriebseinheit für ein Raupenfahrzeug,
- Fig. 2: eine zweite Ausführungsform einer hydraulischen Antriebseinheit und
- Fig. 3: einen detaillierten Ausschnitt des Schaltbildes nach Fig. 2 im Bereich eines Förderstromteilers

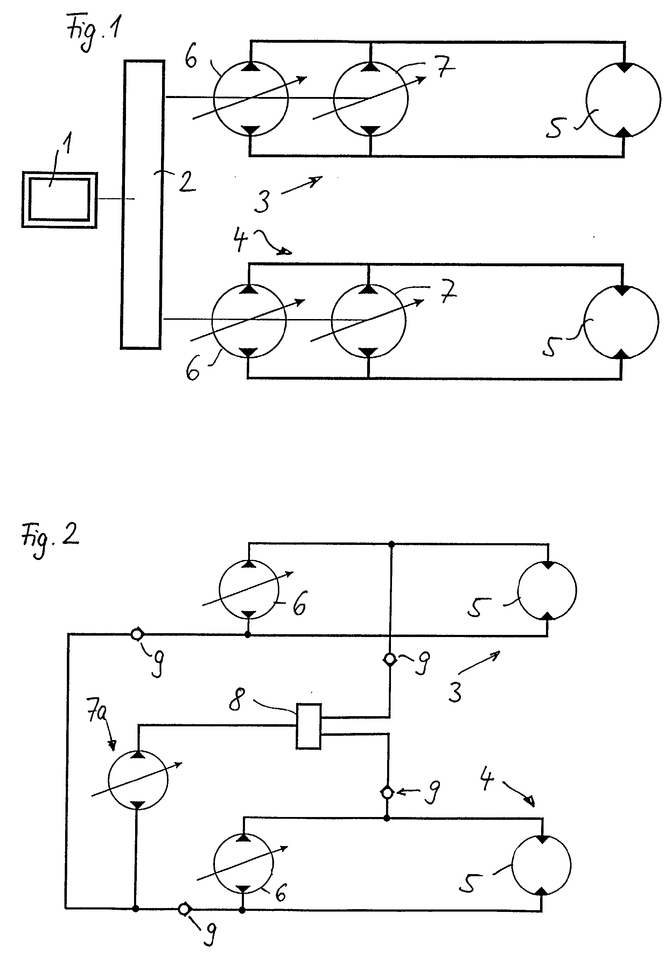

Ein Raupenfahrzeug, insbesondere für den Einsatz auf Schneegelände, weist ein Raupenfahrwerk auf, das auf den beiden Fahrzeugseiten mit jeweils einem Raupenfahrwerk versehen ist. Jedes Raupenfahrwerk weist eine Raupe, die häufiger auch als Kette bezeichnet ist, auf. Die Raupe ist über ein Antriebsrad sowie mehrere Lauf- und Umlenkräder geführt. Somit ergeben sich zwei Raupenfahrwerke, d.h. ein Raupenfahrwerk pro Fahrzeugseite, die durch jeweils einen separaten Antriebsstrang angetrieben werden. Hierdurch ist die Lenkbarkeit des Raupenfahrzeugs gewährleistet, da durch unterschiedliches Antreiben beider Raupenfahrwerke eine entsprechende Drehung des Raupenfahrzeugs erzielbar ist. Jedem Raupenfahrwerk ist somit eine eigene Antriebsseite zugeordnet. Jede Antriebsseite weist einen hydraulischen Kostantmotor 5 auf, der dem jeweiligen Antriebsrad des Raupenfahrwerks zugeordnet ist. Jede Antriebsseite 3, 4 (Fig.1 und 2) weist unabhängig von der speziellen Ausführung der Antriebseinheit jeweils eine hydraulische, verstellbare Fördereinrichtung in Form einer Hauptverstellpumpe 6 auf, die dem hydraulischen Konstantmotor 5 der jeweiligen Antriebsseite 3, 4, zugeordnet ist.

Um den jeweiligen Konstantmotor 5 mit höheren Drehzahlen laufen lassen zu können, ist beim Ausführungsbeispiel nach Fig. 1 jeder Antriebsseite 3, 4 ein zusätzliches Fördermittel in Form einer hydraulischen Zusatzverstellpumpe 7 vorgesehen, die ebenfalls in den Hydraulikkreislauf des Konstantmotors 5 der Antriebsseite 3, 4 eingebunden ist. Die Hauptverstellpumpe 6 und die Zusatzverstellpumpe 7 sind beim dargestellten Ausführungsbeispiel über eine Abtriebsseite eines Verteilergetriebes 2 miteinander gekoppelt. Das zentrale Verteilergetriebe 2 ist einem Verbrennungsmotor in Form eines Dieselmotors 1 des Raupenfahrzeugs nachgeschaltet und ist insbesondere in Form eines Planetengetriebes ausgeführt.

Der Verbrennungsmotor 1 dient als Haupt- oder Fahrantrieb ,der die Fördereinrichtungen und damit die hydraulischen Antriebseinheiten speist.

Die Ansteuerung aller Antriebskomponenten erfolgt über eine elektrische Steuereinheit, die neben dem Verbrennungsmotor auch die Hydraulikkreise ansteuert. Bei Dieselfahrzeugen sind derartige Steuereinheiten grundsätzlich bekannt, so dass an dieser Stelle hierauf nicht eingegangen werden muß.

Die Zusatzverstellpumpen 7 weisen ein geringeres Fördervolumen als die Hauptverstellpumpen 6 auf. Falls Konstantmotoren 5 mit einem Schluckvolumen von 107cm³/U eingesetzt werden, denen Hauptverstellpumpen mit einem Fördervolumen von 125cm³/U und Zusatzverstellpumpen mit einem Fördervolumen von 40cm³/U zugeordnet werden, so ergibt sich gegenüber Höchstgeschwindigkeiten von bekannten Raupenfahrzeugen mit lediglich jeweils einer Verstellpumpe pro Konstantmotor ein Zuwachs in der Höchstgeschwindigkeit von ca. 30%. Die Höchstgeschwindigkeit bei derartigen bekannten Raupenfahrzeugen liegt bei 21km/h. Der gleiche Zuwachs an Höchstgeschwindigkeit ergibt sich auch, wenn man Hauptverstellpumpen 6 mit einem reduzierten Fördervolumen von insbesondere 90cm³/U mit höherer Drehzahl betreibt und die beiden Zusatzverstellpumpen 7 mit einem Fördervolumen von 56cm³/U auslegt.

Ein Geschwindigkeitszuwachs von ca. 20% ergibt sich beim Einsatz von Hauptverstellpumpen 6 mit einem Fördervolumen von 71cm³/U sowie entsprechend erhöhter Drehzahl und der Verwendung von Zusatzverstellpumpen 7 mit einem Fördervolumen von 56cm³/U. Hierdurch ergibt sich eine besonders gute Regelbarkeit und gute Wirkungsgrade für kleine Geschwindigkeiten. Damit ist eine solche Variante insbesondere für schwere Arbeiten des Raupenfahrzeugs einsetzbar. Derartige schwere Arbeiten können durch den Einsatz des Raupenfahrzeugs im Windenbetrieb oder mit einem vorgesetzten Schubgerät auftreten.

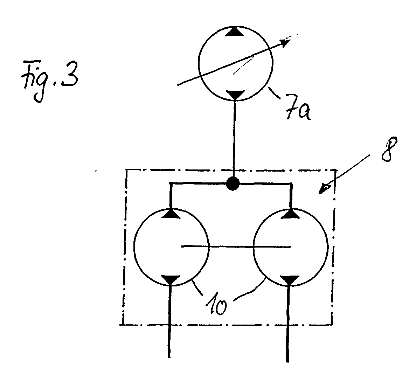

Beim Ausführungsbeispiel nach den Figuren 2 und 3 ist jede Antriebsseite 3, 4 ebenfalls mit einem hydraulischen Konstantmotor 5 und einer verstellbaren Fördereinrichtung in Form einer Hauptverstellpumpe 6 versehen. Als zusätzliches Fördermittel wird in dem jeweiligen Hydraulikkreislauf ein zusätzlicher Förderstrom mittels eines hydraulischen Stromteilers 8 erzielt, der je Antriebsseite 3, 4 jeweils einen gleich großen Förderstrom von einer zentralen Förderpumpe 7a ableitet. Diese ist beim dargestellten Ausführungsbeispiel eineals Antrieb für eine auf dem Raupenfahrzeug vorhandene Winde dienende Windenpumpe. Die zentrale Windenpumpe 7a fördert das zusätzliche Fördervolumen für beide Antriebsseiten 3, 4, wobei der mechanische Stromteiler 8 die für beide Seiten benötigten Fördervolumina gemäß der Darstellung nach Fig. 2 abzweigt. Rückflußverhinderungsmittel 9, insbesodere als Rückschlagventile ausgelegt, gewährleisten die einwandfreie Funktion des Hydraulikkreislaufes. Der mechanische Stromteiler 8 teilt das Fördervolumen in gleiche Teilströme pro Antriebsseite 3, 4 auf. Der mechanische Stromteiler besteht, wie anhand der Fig. 3 erkennbar ist, aus zwei miteinander gekoppelten, hydraulischen Kostantmotoren 10, die jeweils das gleiche Fördervolumen aufweisen. Falls für die vorhandenen Hauptverstellpumpen 6 beider Antriebsseiten 3, 4 Pumpen mit einem Fördervolumen von 125cm³/U und für die Windenpumpe 7a eine Pumpe mit einem Fördervolumen von 90cm³/U eingesetzt werden, so ergibt sich in Verbindung mit den zuvor beschriebenen Konstantmotoren, die auf 107cm³/U ausgelegt sind, ein Zuwachs der Höchstgeschwindigkeit gegenüber bekannten Raupenfahrzeugen von ca. 36%. Der Stromteiler 8 teilt den Förderstrom der Windenpumpe 7a auf die beiden Hydraulikkreisläufe beider Antriebsseiten 3, 4 im gleichen Verhältnis mit 45cm³/U für jede Antriebsseite auf.

Es ist auch möglich, ergänzend Konstantmotoren mit einem höheren Schluckvolumen von 125cm³/U einzusetzen. Hierdurch ergibt sich für jedes Antriebsrad ein erhöhtes Drehmoment und eine entsprechende Erhöhung der Höchstgeschwindigkeit.

Aus den Zeichnungen nicht erkennbar ist die Ansteuerung der Zusatzverstellpumpen 7 über die elektronische Steuereinheit. Diese erfolgt insbesondere elektrisch über Servoverstellgeräte in stufenloser Ansteuerung. Es ist bei einer anderen Ausführungsform der Erfindung eine Schaltung in mehreren Stufen oder bei einem weiteren, nicht dargestellten Ausführungsbeispiel der Erfindung eine äußerst einfache Ein-Aus-Schaltung vorgesehen. Falls mittels entsprechender Sensorikeinheiten der hydraulische Gleichlauf beider Antriebsseiten 3, 4 überwacht wird, ist es auch möglich, über Proportionalmagnetventile eine entsprechende Ansteuerung der Zusatzverstellpumpen vorzusehen. Der Einsatz von Proportionalmagnetventilen eignet sich insbesondere beim Ausführungsbeispiel nach den Fig. 2 und 3, da dort durch den mechanischen Stromteiler 8 bereits der hydraulische Gleichlauf sichergestellt ist. Es können insbesondere die Rückflußverhinderungsmittel 9 als entsprechende Magnetventile eingesetzt werden.

Bei einem weiteren Ausführungsbeispiel der Erfindung, das zeichnerisch nicht dargestellt ist, ist vorgesehen, bei voller Aussteuerung der Hauptverstellpumpen 6 die Ansteuerung der Zusatzverstellpumpen 7 durch eine elektrische Folgeschaltung abhängig von der Ausgangsspannung der Fahrelektronik, die Teil der Steuereinheit ist, durchzuführen. Dadurch ist sichergestellt, dass beim Abschalten der Hauptverstellpumpen 6 auch die Zusatzverstellpumpen 7 mit abgeschaltet werden.

## Patentansprüche

1. Hydraulische Antriebseinheit für ein Raupenfahrzeug, insbesondere zur Präparierung von Schneepisten, mit wenigstens einem hydraulischen Konstantmotor für ein Antriebsrad sowie mit wenigstens einer vorgeschalteten, verstellbaren Fördereinrichtung für das Hydraulikmedium, sowie mit einer Steuereinheit zum Ansteuern der Fördereinrichtung des wenigstens einen Konstantmotors, **dadurch gekennzeichnet, dass** wenigstens ein zusätzliches Fördermittel (7, 7a, 8) zur Erhöhung des Fördervolumens des Hydraulikmediums zu dem Konstantmotor (5) hin vorgesehen ist.

2. Antriebseinheit nach Anspruch 1, **dadurch gekennzeichnet, dass** das zusätzliche Fördermittel (7, 7a, 8) ein geringeres Fördervolumen aufweist als die Fördereinrichtung (6).

3. Antriebseinheit nach Anspruch 1, **dadurch gekennzeichnet, dass** das zusätzliche Fördermittel ein einstellbares oder ein konstantes Fördervolumen aufweist

4. Antriebseinheit nach Anspruch 1, **dadurch gekennzeichnet, dass** pro Antriebsseite (3, 4) jeweils ein zusätzliches Fördermittel (7, 7a, 8) vorgesehen ist.

5. Antriebseinheit nach Anspruch 1, **dadurch gekennzeichnet, dass** wenigstens ein hydraulischer Konstantmotor (5) mit einem Schluckvolumen von mehr als 120cm³/U vorgesehen sind.
